# DEMANDE DE BREVET EUROPEEN

(11) **EP 1 149 847 A1**
(43) Date de publication de la demande: **31.10.2001**
(21) Numéro de dépôt: 01108834.1
(22) Date de dépôt: 09.04.2001
(51) Int. Cl.: C08C 19/44

(54) **Procédé de préparation par voie anionique d'un élastomère diénique ramifié**

(30) Priorité: 25.04.2000 FR 0005344
(71) Demandeur: Sociéte de Technologie Michelin, 63000 Clermont-Ferrand Cedex 09 (FR); Michelin Recherche et Technique S.A., 1763 Granges-Paccot (CH)
(72) Inventeur: Cabioch, Jean-Luc, 63119 Chateaugay (FR); Dajoux, Nicole, Boisséjour, 63122 Ceyrat (FR)
(74) Mandataire: Ribière, Joel

(57) **Abrégé**

La présente invention concerne un procédé de préparation par voie anionique d'un élastomère diénique ramifié.

Un procédé de préparation selon l'invention d'un élastomère diénique ramifié consiste:
- dans un milieu de polymérisation comprenant un solvant hydrocarboné et un initiateur organométallique, en une polymérisation par voie anionique d'au moins un monomère diène conjugué ayant de 4 à 12 atomes de carbone, et
- en une adjonction audit milieu de polymérisation, pendant ou à l'issue de ladite polymérisation, d'un agent d'étoilage constitué d'un tris-(alkylphényl)phosphite de telle manière que le rapport du nombre de moles d'agent ramifiant sur le nombre de moles d'initiateur soit compris entre 0,1 et 1,5.

Selon l'invention, ce procédé est tel qu'il consiste à utiliser le tris-(2,4-di-tert-butylphényl)phosphite à titre d'agent d'étoilage.

## Description

La présente invention concerne un procédé de préparation par voie anionique d'un élastomère diénique ramifié. L'invention s'applique notamment à l'obtention d'un élastomère étoilé.

De nombreux procédés sont connus pour l'obtention de polymères diéniques ramifiés par voie anionique.

On peut par exemple citer les procédés décrits dans les documents de brevet américains US-A-3 692 874 et US-A-3 244 664, qui consistent notamment à utiliser des halogénosilanes à titre d'agents de couplage pour l'obtention de tels polymères.

On peut également citer les procédés décrits dans les documents de brevet américain US-A-4 914 248 et européen EP-A-260 325 qui divulguent l'utilisation de polyépoxydes, dans les documents de brevet européen EP-A-207 562 et EP-A-423 571, qui divulguent respectivement l'utilisation d'hexatriène et d'un polyéthynylbenzène, ou encore dans le document de brevet américain US-A-4 523 628, qui divulgue l'étoilage au moyen de phosphines halogénées.

Le document de brevet américain US-A-3 803 266 divulgue, dans son unique exemple de réalisation, l'utilisation de triéthylphosphite pour l'obtention d'un copolymère à blocs de styrène et de butadiène qui soit étoilé. Ce document mentionne par ailleurs la possibilité d'utiliser des trialkylphosphites, qui sont tels que chaque groupe alkyl comporte de 1 à 10 atomes de carbone, de préférence 1 ou 2, ou des triarylphosphites qui sont tels que chaque groupe aryl comporte de 1 à 12 atomes de carbone.

Le document de brevet américain US-A-4 539 136 divulgue l'utilisation d'un agent d'étoilage trifonctionnel de type tris-(nonylphényl)phosphite, dans le but d'obtenir un copolymère diénique à blocs d'un diène conjugué et d'un monomère vinylaromatique qui est obtenu par voie anionique et qui présente un taux élevé d'étoilage, tout en disposant d'une plage étendue pour la valeur du rapport molaire de la quantité d'agent d'étoilage sur celle d'initiateur lithié.

Dans les exemples de réalisation décrits dans ce document, on fait d'abord réagir dans du cyclohexane un initiateur organométallique constitué de sec-butyllithium avec du styrène puis, suite à la polymérisation du styrène, on ajoute du butadiène au produit de cette polymérisation. Suite à la polymérisation totale du butadiène, on ajoute l'agent d'étoilage précité au copolymère à blocs ainsi obtenu, de manière que le rapport du nombre de moles de cet agent sur le nombre de moles dudit initiateur varie de 0,19 à 1,05.

La demanderesse a découvert d'une manière surprenante qu'un procédé de préparation d'un élastomère diénique ramifié, ledit procédé consistant:
- dans un milieu de polymérisation comprenant un solvant hydrocarboné et un initiateur organométallique, en une polymérisation par voie anionique d'au moins un monomère diène conjugué ayant de 4 à 12 atomes de carbone, et
- en une adjonction audit milieu de polymérisation, pendant ou à l'issue de ladite polymérisation, d'un agent d'étoilage constitué d'un tris-(alkylphényl)phosphite de telle manière que le rapport du nombre de moles d'agent d'étoilage sur le nombre de moles d'initiateur soit compris entre 0,1 et 1,5,
qui consiste à utiliser le tris(2,4-di-tert-butylphényl)phosphite à titre d'agent d'étoilage, permet de procurer un taux élevé de chaînes étoilées.

On notera que le tris(2,4-di-tert-butylphényl)phosphite est uniquement connu à ce jour comme agent de protection ou de stabilisation des polymères. On pourra par exemple se référer au document de brevet européen EP-A-048 562 pour une telle utilisation de ce phosphite.

Par élastomère diénique, on entend de manière connue un homopolymère ou un copolymère qui est issu au moins en partie de monomères diènes (monomères porteurs de deux doubles liaisons carbone-carbone, conjuguées ou non).

L'élastomère diénique préparé par le procédé de l'invention peut être tout homopolymère obtenu par polymérisation d'un monomère diène conjugué ayant de 4 à 12 atomes de carbone, ou tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinyle-aromatiques conviennent par exemple le styrène, l'ortho-, méta-, para-méthylstyrène, le mélange commercial "vinyltoluène", le para-tertiobutylstyrène, le divinylbenzène. On notera que le styrène est utilisé à titre préférentiel.

Les copolymères peuvent contenir entre 99% et 20% en poids d'unités diéniques et entre 1 % et 80 % en poids d'unités vinyle-aromatiques.

A titre préférentiel conviennent les polybutadiènes et en particulier ceux ayant une teneur en unités 1-2 comprise entre 8% et 80%, les polyisoprènes, les copolymères de butadiène-styrène et en particulier ceux ayant une teneur en styrène comprise entre 4 et 50% en poids et plus particulièrement entre 20% et 40% en poids, une teneur en liaisons -1,2 de la partie butadiénique comprise entre 8% et 65%, une teneur en liaisons trans-1,4 comprise entre 30% et 80%, les copolymères de butadiène-isoprène et notamment ceux ayant une teneur en isoprène comprise entre 5 et 90% en poids, les copolymères isoprène-butadiène et notamment ceux ayant une teneur en isoprène comprise entre 5 et 90% en poids.

Dans le cas des copolymères de butadiène/styrène/isoprène conviennent ceux ayant une teneur en styrène comprise entre 5 et 50%, en poids et plus particulièrement comprise entre 10% et 40%, en isoprène comprise entre 15% et 60% en poids et plus particulièrement comprise entre 20% et 50% en poids, une teneur en butadiène comprise entre 5 et 50% et plus particulièrement compris entre 20% et 40% en poids, une teneur en unités -1,2 de la partie butadiènique comprise entre 4% et 85%, une teneur en unités trans 1,4 de la partie butadiénique comprise entre 6% et 80%, une teneur en unité -1,2 plus -3,4 de la partie isoprénique comprise entre 5% et 70% et une teneur en unités trans-1,4 de la partie isoprénique comprise entre 10% et 50%.

A titre de solvant hydrocarboné pouvant être utilisé pour le milieu de polymérisation, conviennent tout particulièrement le toluène, le cyclohexane, le méthylcyclohexane, l'heptane, le n-hexane, le cyclopentane ainsi que tout mélange comportant deux de ces solvants.

Selon une autre caractéristique du procédé selon l'invention, le rapport du nombre de moles de l'agent d'étoilage selon l'invention sur le nombre de mole dudit initiateur peut varier de 0,1 à 1,5 et, à titre préférentiel, ce rapport varie de 0,2 à 0,5.

A titre d'initiateur utilisable dans le procédé de l'invention, on peut par exemple utiliser un composé organolithié, avantageusement le n-butyllithium.

On notera que l'agent d'étoilage selon l'invention peut être utilisé pendant ou à l'issue de la réaction d'homopolymérisation du monomère diène conjugué ou de copolymérisation d'un tel monomère avec un monomère vinylaromatique.

On notera également que cette réaction peut être conduite selon un procédé continu ou discontinu.

Selon une autre caractéristique de l'invention, on peut adjoindre au milieu de polymérisation un composé polaire, de préférence un composé appartenant au groupe constitué par les diéthers, les diamines, les tétrahydrofuranes (tels que le THF) et les éthers tétrahydrofurfuryliques.

Convient préférentiellement à titre de diamine la tétraméthyléthylènediamine.

Conviennent notamment à titre de diéthers le 1,2-diéthoxyéthane, le 1,2-diméthoxyéthane, les éthers tétrahydrofurfuryliques tels que les tétrahydrofurfurylméthyléthers, les tétrahydrofurfuryléthyléthers, les tétrahydrofurfurylpropyléthers.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans les exemples qui suivent, la viscosité Mooney ML (1+4) à 100° C est mesurée selon la norme ASTM D-1646.

Les viscosités qui sont indiquées pour les élastomères obtenus sont des viscosités inhérentes mesurées à une concentration de 1 g/l dans le toluène à 25° C.

On a utilisé la technique SEC (chromatographie d'exclusion par la taille) pour déterminer les fractions pondérales de chaînes étoilées relatives à des échantillons de ces élastomères. Selon cette technique, on sépare physiquement les macromolécules suivant leurs tailles respectives à l'état gonflé, dans des colonnes remplies d'une phase stationnaire poreuse.

On utilise pour la séparation précitée un chromatographe commercialisé sous la dénomination « WATERS » et sous le modèle « 150C ». On utilise un jeu de deux colonnes « WATERS » dont le type est « STYRAGEL HT6E ».

On a par ailleurs utilisé la technique de rayonnement proche infra-rouge pour déterminer des caractéristiques de microstructure relatives aux élastomères ramifiés obtenus. On a à cet effet utilisé un spectromètre commercialisé sous la dénomination « BRUKER ».

### Exemple 1- Préparation en discontinu d'un polybutadiène étoilé:

Dans une bouteille de 250 cc contenant 70 grammes de cyclohexane, on injecte 10 grammes de butadiène. Après neutralisation des impuretés à l'aide de n-butyllithium, on ajoute 0,0002 mole de n-butyllithium actif. La polymérisation est conduite à 60° C.

Lorsque le taux de conversion atteint 100 % (viscosité de 0,84 dl/g) on injecte dans la bouteille 0.000075 mole de tris(2,4-di-tert-butylphényl)phosphite. La solution est agitée pendant 10 minutes à 60° C. Le polymère est stoppé et on le soumet à un traitement anti-oxydant par addition de 0,2 partie pour cent parties en poids (pce) de 2,2'-méthylène bis (4-méthyl-6-tertiobutylphénol) et de 0,2 pce de N-(1,3-diméthylbutyl)-N'-phényl-p-phénylènediamine.

Le polymère est récupéré par l'opération classique de stripping à la vapeur d'eau du solvant, puis séché sur outil à 100° C pendant 15 minutes.

La viscosité inhérente du polymère, après stripping et séchage, est de 1,42 dl/g.

L'analyse par proche infra-rouge du polymère montre que le polybutadiène ainsi préparé contient 10 % en masse d'enchaînements vinyliques.

La fraction pondérale de chaînes étoilées, déterminée par chromatographie d'exclusion par la taille (technique SEC), est d'environ 80 %.

### Exemple 2- Préparation en discontinu d'un copolymère styrène/ butadiène étoilé:

Dans un réacteur de 10 litres contenant 5,8 litres de cyclohexane, on injecte 230 grammes de styrène et 410 grammes de butadiène, ainsi que 1150 ppm de tétrahydrofurane (THF). Après neutralisation des impuretés à l'aide de n-butyllithium, on ajoute 0,0065 mole de n-BuLi actif. La polymérisation est conduite à 40° C.

Après 40 minutes de polymérisation (la conversion est de 75 % et la viscosité mesurée sur un prélèvement est de 0,94 dl/g), on injecte 0,0025 mole de tris(2,4-di-tert-butylphényl)phosphite en solution à 0,05 mole/litre dans le cyclohexane. La solution est agitée pendant 15 minutes à 40° C. Le copolymère obtenu est stoppé et on le soumet au même traitement anti-oxydant qu'à l'exemple 1 ci-dessus.

Le copolymère est récupéré par l'opération classique de stripping à la vapeur d'eau du solvant, puis séché sur outil à 100° C pendant 15 minutes.

La viscosité inhérente du copolymère, après stripping et séchage, est de 1,59 dl/g.

Quant à la viscosité Mooney ML (1+4, 100° C), elle est de 35.

L'analyse par proche infra-rouge du copolymère styrène/ butadiène ainsi préparé montre qu'il contient 24 % en masse de styrène, la fraction butadiénique contenant 40 % en masse d'enchaînements vinyliques.

La fraction pondérale de chaînes étoilées, déterminée par la technique SEC précitée, est de 70 %.

### Exemple 3- Préparation en continu d'un copolymère styrène/ butadiène étoilé:

Les polymérisations sont conduites dans un réacteur de 14 litres.

Dans ce réacteur sont ajoutés du cyclohexane, du butadiène, du styrène et de la tétraméthyléthylènediamine, suivant des proportions respectives de 100 / 12,2 / 2,3 / 0,009.

On injecte ensuite en entrée de ligne 200 micromoles de n-butyllithium pour cent grammes de monomères, afin de neutraliser les impuretés protiques apportées par les différents constituants présents dans ladite entrée de ligne.

Puis on injecte à l'entrée du réacteur 1450 micromoles de n-butyllithium pour cent grammes de monomères.

On notera que les différents débits sont ajustés les uns par rapport aux autres, de telle sorte que le temps de séjour moyen dans le réacteur soit de 40 minutes. La température est maintenue à 80° C. Le taux de conversion, mesuré sur un prélèvement réalisé en sortie de réacteur, est de 92 %. Quant à la viscosité inhérente, elle est de 1,15 dl/g.

On injecte ensuite 500 micromoles de tris(2,4-di-tert-butylphényl)phosphite dans un mélangeur dynamique, qui est muni d'un agitateur réglé à une vitesse de 2500 tours/min. Après 4 minutes, on soumet le copolymère ainsi obtenu au même traitement anti-oxydant qu'à l'exemple 1 ci-dessus.

On procède à la séparation du copolymère de sa solution à l'aide d'une opération de stripping à la vapeur d'eau pendant 20 minutes, puis on sèche le copolymère ainsi extrait sur outil à cylindres à 100° C et pendant 15 minutes.

La viscosité inhérente du copolymère étoilé est de 1,70 dl/g, sa viscosité Mooney ML (1+4, 100° C) étant de 52. De plus, ce copolymère contient un taux massique de styrène incorporé de 23 % et un taux massique de motifs vinyliques pour la partie butadiénique égal à 44 %.

## Revendications

1. Procédé de préparation d'un élastomère diénique ramifié, ledit procédé consistant:
- dans un milieu de polymérisation comprenant un solvant hydrocarboné et un initiateur organométallique, en une polymérisation par voie anionique d'au moins un monomère diène conjugué ayant de 4 à 12 atomes de carbone, et
- en une adjonction audit milieu de polymérisation, pendant ou à l'issue de ladite polymérisation, d'un agent d'étoilage constitué d'un tris-(alkylphényl)phosphite de telle manière que le rapport du nombre de moles d'agent ramifiant sur le nombre de moles d'initiateur soit compris entre 0,1 et 1,5,
**caractérisé en ce qu'**il consiste à utiliser le tris-(2,4-di-tert-butylphényl)phosphite à titre d'agent d'étoilage.

2. Procédé de préparation d'un élastomère diénique ramifié selon la revendication 1, **caractérisé en ce qu'**il consiste à adjoindre ledit agent d'étoilage de telle manière que ledit rapport molaire soit compris entre 0,2 et 0,5.

3. Procédé de préparation d'un élastomère diénique ramifié selon la revendication 1 ou 2, **caractérisé en ce qu'**il consiste à utiliser le butadiène à titre de monomère diène conjugué.

4. Procédé de préparation d'un élastomère diénique ramifié selon la revendication 1 ou 2, **caractérisé en ce qu'**il consiste à utiliser l'isoprène à titre de monomère diène conjugué.

5. Procédé de préparation d'un élastomère diénique ramifié selon une des revendications précédentes, **caractérisé en ce qu'**il consiste à copolymériser ledit monomère diène conjugué et un monomère vinylaromatique ayant de 8 à 20 atomes de carbone.

6. Procédé de préparation d'un élastomère diénique ramifié selon une des revendications précédentes, **caractérisé en ce qu'**il consiste à utiliser un composé organolithié à titre d'initiateur.

7. Procédé de préparation d'un élastomère diénique ramifié selon la revendication 6, **caractérisé en ce qu'**il consiste à utiliser le n-butyllithium à titre d'initiateur.

8. Procédé de préparation d'un élastomère diénique ramifié selon une des revendications précédentes, **caractérisé en ce qu'**il consiste à adjoindre audit milieu de polymérisation un composé polaire.

9. Procédé de préparation d'un élastomère diénique ramifié selon la revendication 8, **caractérisé en ce qu'**il consiste à utiliser à titre de composé polaire un composé appartenant au groupe constitué par les diéthers, les diamines, les tétrahydrofuranes et les éthers tétrahydrofurfuryliques.

10. Procédé de préparation d'un élastomère diénique ramifié selon une des revendications précédentes, **caractérisé en ce qu'**il consiste à utiliser à titre de solvant hydrocarboné un solvant appartenant au groupe constitué par le toluène, le cyclohexane, le méthylcyclohexane, l'heptane, le n-hexane, le cyclopentane ou un mélange desdits solvants.
